Europäisches Patentamt

European Patent Office

Office européen des brevets

(19)

(11) Numéro de publication: **0 353 122**
**A1**

## (12) DEMANDE DE BREVET EUROPEEN

(21) Numéro de dépôt: 89401988.4

(22) Date de dépôt: 11.07.89

(51) Int. Cl.⁵: **A 23 J 3/00**
A 23 J 1/20, A 23 L 1/305,
A 23 C 9/20

(30) Priorité: 18.07.88 FR 8809669

(43) Date de publication de la demande:
31.01.90 Bulletin 90/05

(84) Etats contractants désignés: DE GB IT NL

(71) Demandeur: **Union des Coopératives Laitières d'ISIGNY-SUR-MER et de SAINTE-MERE-EGLISE (Union de Coopératives Agricoles)**
**2, rue du Docteur Boutrois**
**F-14230 Isigny-sur-Mer (FR)**

(72) Inventeur: **Thibault, Philippe, André**
**58 Rue Romain Rolland**
**F-31520 Romainville Saint-Agné (FR)**

(74) Mandataire: **Coias, Jean-Pierre et al**
**Cabinet de Boisse 37, avenue Franklin D. Roosevelt**
**F-75008 Paris (FR)**

(54) **Hydrolysat partiel de protéines de lactosérum, procédé enzymatique de préparation de cet hydrolysat, et aliment lacté diététique hypoallergénique le contenant.**

(57) L'invention se rapporte aux biotechnologies. Elle concerne un hydrolysat partiel de protéines de lactosérum ne contenant pas de protéines entières résiduelles, caractérisé en ce qu'il contient des peptides répartis selon la distribution suivante, en fonction de leur masse molaire :

| Masse molaire (g par mole) | Proportion pondérale (en g de peptides pour 100 g de peptides totaux) |
|---|---|
| MM > 5000 | 0 - 5 |
| 5000 > MM > 3500 | 15 - 25 |
| 3500 > MM > 1500 | 20 - 30 |
| 1500 > MM > 500 | 35 - 45 |
| MM < 500 | 5 - 10 |

ainsi que des acides aminés libres, la teneur de l'hydrolysat en acides aminés libres étant inférieure à 10% (calculée en gramme d'azote pour 100 grammes d'azote total), ainsi qu'un produit enzymatique pour sa préparation. Application à la production d'aliments lactés diététiques.

EP 0 353 122 A1

## Description

### Hydrolysat partiel de protéines de lactosérum, procédé enzymatique de préparation de cet hydrolysat, et aliment lacté diététique hypoallergénique le contenant.

L'invention concerne un hydrolysat partiel de protéines de lactosérum, un procédé enzymatique de préparation de cet hydrolysat, et un aliment lacté diététique hypoallergénique contenant ledit hydrolysat.

Les aliments lactés diététiques pour nourrissons sont souvent fabriqués à partir de protéines extraites de lait bovin. Afin de se rapprocher du lait humain, une formulation particulière des différents ingrédients du lait bovin est nécessaire et, du seul point de vue des protéines, on doit veiller à ce que l'aminogramme (et en particulier l'apport d'acides aminés essentiels tels que la thréonine, le tryptophane et la lysine) soit le plus proche possible de celui des protéines du lait humain.

Pour cela il est nécessaire, en particulier de rééquilibrer le rapport Protéines de sérum/Caséines du lait bovin en faveur des protéines sériques. Les aliments lactés diététiques ainsi obtenus contiennent une forte proportion de protéines de lactosérum. Il se pose alors le problème suivant : les fractions protéiques des lactosérums humains et bovins n'ont pas la même composition ; en particulier, le lactosérum humain ne contient pas de bêta-lactoglobuline alors qu'environ la moitié de la fraction protéique du lactosérum bovin est représenté par de la bêta-lactoglobuline. Cette différence de composition est à l'origine de phénomènes d'allergie chez certains nourrissons lorsque ceux-ci sont alimentés avec des laits de composition à base de protéines sériques d'origine bovine. Cette allergie se manifeste notamment par des troubles digestifs (douleurs abdominales, diarrhées, vomissements).

La bêta-lactoglobuline n'est pas la seule en cause même si elle a le pouvoir allergénique le plus important (antigène majeur), l'alpha-lactalbumine peut aussi être à l'origine de phénomènes d'allergie.

Afin d'améliorer la digestibilité d'aliments lactés à base de protéines de lactosérum, diverses solutions ont été proposées dans le passé, par exemple la dénaturation thermique des protéines ou l'élimination quantitative des lactoglobulines. Plus récemment, on a proposé d'hydrolyser les protéines sériques par voie enzymatique.

FR-A-2 450 842 décrit un procédé de préparation d'un hydrolysat de protéines purifié, exempt de protéines et de macropeptides, selon lequel on hydrolyse, par exemple à l'aide de pancréatine, une solution aqueuse de protéines, on fait subir au produit de l'hydrolyse un traitement thermique dénaturant les protéines résiduelles et enfin on élimine lesdites protéines par ultrafiltration, le perméat d'ultrafiltration constituant l'hydrolysat de protéines purifié. Les protéines peuvent être d'origines diverses, notamment des protéines de petit lait. Le brevet ne donne pas d'indications précises sur la composition en peptides de l'hydrolysat obtenu.

EP-A-22019 décrit un hydrolysat enzymatique total de protéines de lactosérum et un procédé pour sa préparation. L'hydrolysat, qui ne contient pratiquement pas de protéines résiduelles, consiste en peptides dont au moins 50% contiennent 2 à 5 acides aminés (soit une masse molaire inférieure à 700 environ), la proportion d'acides aminés libres étant inférieure à 15%. Il s'agit là d'un hydrolysat ayant subi une hydrolyse très poussée, qui est destiné à l'alimentation entérale de malades. Un tel degré d'hydrolyse n'est pas nécessaire à la production d'aliments lactés diététiques. Le procédé de préparation de cet hydrolysat total met en jeu une hydrolyse enzymatique de protéines de lactosérum avec une enzyme protéolytique, telle que la pancréatine, et ladite hydrolyse peut être précédée et/ou suivie d'une étape d'ultrafiltration.

La présente invention vise à fournir un nouvel hydrolysat partiel de protéines de lactosérum approprié à la production d'aliments lactés diététiques hypoallergéniques convenant pour l'alimentation des nourrissons et des personnes allergiques au lait bovin, ainsi qu'un procédé pour sa préparation.

Plus particulièrement, l'invention concerne un hydrolysat partiel de protéines de lactosérum ne contenant pas de protéines entières résiduelles, caractérisé en ce qu'il contient des peptides répartis selon la distribution suivante, en fonction de leur masse molaire :

| Masse molaire (g par mole) | Proportion pondérale (en g de peptides pour 100 g de peptides totaux) |
|---|---|
| MM > 5000 | 0 - 5 |
| 5000 > MM > 3500 | 15 - 25 |
| 3500 > MM > 1500 | 20 - 30 |
| 1500 > MM > 500 | 35 - 45 |
| MM < 500 | 5 - 10 |

ainsi que des acides aminés libres,, la teneur de l'hydrolysat en acides aminés libres étant inférieure à 10% (calculée en gramme d'azote pour 100 grammes d'azote total). L'invention concerne aussi un aliment lacté diététique hypoallergénique contenant ledit hydrolysat partiel.

Enfin l' invention concerne un procédé enzymatique de préparation dudit hydrolysat partiel, qui comprend les étapes suivantes :

a) hydrolyse enzymatique à l'aide d'un mélange des enzymes chymotrypsine et trypsine ayant un rapport d'activité chymotrypsine/trypsine compris entre 1,5 et 3,0, d'un substrat choisi parmi les lactosérums, les lactosérums délipidés et/ou déminéralisés, les lactosérums concentrés, les lactosérums concentrés délipidés et/ou déminéralisés, et les solutions aqueuses de protéines extraites desdits lactosérums, à un pH de 7,5 à 9,0 et à une température de 40 à 60°C pendant un temps permettant d'obtenir la distribution de peptides définie ci-dessus, le rapport chymotrypsine/ protéines totales contenues dans le substrat étant compris entre 20000 et 300000 unités ATEE pour 100 g de protéines totales ; et

b) séparation des enzymes et des protéines résiduelles non hydrolysées.

Selon un mode de mise en oeuvre, on utilise un mélange d'enzymes solubles et l'étape (b) est réalisée par ultrafiltration et/ou dia-filtration avec emploi d'au moins une membrane ayant un seuil de coupure inférieur à 10000.

Selon un autre mode de mise en oeuvre, on utilise un mélange d'enzymes immobilisées et l'étape (b) consiste d'abord à séparer les enzymes immobilisées par décantation, centrifugation et/ou filtration, puis à séparer les protéines résiduelles non hydrolysées par ultra-filtration et/ou dia-filtration avec emploi d'au moins une membrane ayant un seuil de coupure inférieur à 10000, afin d'obtenir l'hydrolysat.

Selon une variante du mode de mise en oeuvre dans lequel on utilise un mélange d'enzymes immobilisées, l'étape (b) consiste d'abord à séparer les enzymes immobilisées par décantation, centrifugation et/ou filtration, puis à provoquer une précipitation des protéines résiduelles non-hydrolysées par chauffage du produit obtenu à une température de 60 à 70°C en milieu acide, et enfin à séparer le précipité résultant par centrifugation ou micro-filtration du reste du produit qui constitue l'hydrolysat.

Le produit de l'invention est un hydrolysat partiel de protéines de lactosérum qui a pour caractéristique de limiter les réactions d'allergie lorsqu'il est incorporé à un aliment lacté diététique et notamment à un lait de composition pour nourrissons (aliment lacté diététique hypoallergénique pour nourrissons).

Il présente les caractères suivants :
- Absence de protéines entières (non hydrolysées).
- Concentration des acides aminés libres limitée (maximum 10 g d'azote sous forme d'acides aminés pour 100 g d'azote total). Cette caractéristique présente l'avantage, par rapport à un taux d'acides aminés libres plus élevé, de limiter la pression osmotique dans l'organisme et d'augmenter la faculté d'assimilation immédiate de la matière azotée.
- Présence de peptides de taille moyenne (3500 > masse molaire > 1500). Cette caractéristique est importante du point de vue de la formulation de l'aliment lacté. En effet, de la matière grasse entre dans la composition du produit fini (généralement de l'ordre de 20% de la matière sèche) et celle-ci doit pouvoir se disperser facilement sans former une seconde phase lors de la reconstitution du lait par ajout d'eau. Pour cela, des composés émulsifiants doivent être présents dans la formulation ; les peptides de protéines de lactosérum, de taille moyenne, présentent un bon pouvoir émulsifiant et cette propriété disparaît lorsque le peptide est plus court. Il est donc intéressant de conserver dans l'hydrolysat une fraction peptidique de taille moyenne.

L'hydrolysat de l'invention présente la distribution de peptides suivante :

| Masse molaire (g par mole) | Proportion pondérale (g de peptides pour 100g de peptides totaux) |
|---|---|
| MM > 5000 | 0 - 5 |
| 5000 > MM > 3500 | 15 - 25 |
| 3500 > MM > 1500 | 20 - 30 |
| 1500 > MM > 500 | 35 - 45 |
| MM < 500 | 5 - 10 |

Le procédé de l'invention est basé sur une hydrolyse partielle des protéines de lactosérum jusqu'à élimination totale de l'alpha-lactalbumine à l'aide d'un mélange optimisé de trypsine et de chymotrypsine, suivie d'une procédure de séparation des enzymes et des protéines résiduelles ou insuffisamment hydrolysées, d'une part, et des peptides que l'on veut recueillir, d'autre part.

Les conditions opératoires ont été optimisées afin d'atteindre les productivités les plus élevées possibles.

Matières premières que l'on peut mettre en oeuvre.

L'hydrolyse peut être réalisée directement à partir de lactosérums d'origines diverses : acides (pâtes fraîches, caséineries), doux (pâtes pressées). Ceux-ci peuvent être utilisés en l'état ou préalablement délipidés et/ou déminéralisés. On peut également adopter comme matière première d'hydrolyse, de tels lactosérums concentrés (extrait sec aux environs de 20%).

L'hydrolyse peut être réalisée aussi à partir de protéines extraites des différents lactosérums précités. On peut obtenir ces protéines à l'état plus ou moins purifié par divers procédés chromatographie par échange d'ions ou par filtration sur gel, précipitation, ultra-filtration. De toutes ces techniques, la plus appropriée car la plus économique et la plus employée industriellement est l'ultra-filtration. On obtient ainsi des préparations de protéines non dénaturées contenant 75 à 85% environ de matière protéique (par rapport à l'extrait sec). A partir de ces préparations de protéines purifiées (sèches ou hydratées), on réalise des solutions contenant environ 100 à 150 g de protéines par litre.

Les lactosérums ou les préparations de protéines reconstituées peuvent être utilisés en l'état ou préalablement clarifiés par centrifugation ou par microfiltration.

On veillera à la qualité microbiologique des matières premières ; en effet, certaines conditions opératoires de l'hydrolyse enzymatique (pH et température) sont favorables à des développements microbiens indésirables pour la qualité du produit fini. On pourra donc être amené à pratiquer, avant hydrolyse, sur la matière première, une opération de pasteurisation ou de stérilisation.

Enzymes utilisées.

Pour les besoins de l'invention, on utilise, comme enzymes, un mélange de trypsine et de chymotrypsine dont les spécificités d'action sont complémentaires. En effet, les deux protéases agissant séparément ne permettent pas d'obtenir un hydrolysat ayant les caractéristiques désirées.

### Définition des Unités d'Activité Enzymatique.

- Activité trypsique : elle est exprimée à partir d'un système d'hydrolyse d'un substrat synthétique, le BAEE (N-benzoyl-L-arginine-éthyl ester). La trypsine hydrolyse le BAEE et libère des protons. A l'aide d'un tampon TRIS/HCL 50mM, pH 8,0, on prépare une solution 100 mM de BAEE et 20 mM de chlorure de calcium.

- Activité chymotrypsique : elle est exprimée à partir d'un système d'hydrolyse d'un autre substrat synthétique, l'ATEE (N-acétyl-L-tyrosine-éthyl ester). La chymotrypsine hydrolyse l'ATEE et libère des protons. La préparation peut être réalisée de la façon suivante : on dissout 135 mg d'ATEE dans 1 ml de méthanol, puis on ajoute 9 ml de tampon TRIS/HCl 50 mM, pH 8,0 (ATEE : 50 mM).

Les préparations de substrat synthétique (BAEE pour la trypsine ou ATEE pour la chymotrypsine) sont placées à 30°C dans un pH-stat et après addition de l'enzyme, on mesure la quantité de base (soude ou potasse, par exemple) consommée pour maintenir le pH à 8,0.

Une Unité d'Activité Trypsique est la quantité de trypsine qui catalyse l'hydrolyse d'une micro-mole de BAEE par minute dans les conditions de la mesure décrite ci-dessus.

Une Unité d'Activité Chymotrypsique est la quantité de chymotrypsine qui catalyse l'hydrolyse d'une micro-mole d'ATEE par minute dans les conditions de la mesure décrite ci-dessus.

### Rapport des deux activités protéasiques

N'importe quel rapport d'activité chymotrypsine/trypsine dans le mélange protéasique qui catalyse l'hydrolyse des protéines de lactosérum, ne convient pas pour les besoins de l'invention. En effet, on a découvert que pour avoir les meilleurs résultats d'hydrolyse du point de vue cinétique mais également pour obtenir l'hydrolysat désiré, il fallait adopter un mélange de trypsine et de chymotrypsine tel que le rapport des activités chymotrypsine/trypsine exprimé dans le système ATEE/BAEE décrit ci-dessus, soit compris entre 1,5 et 3,0.

### Rapport Enzymes/Substrat (Protéases/Protéines)

Ce rapport a une influence sur le profil peptidique de l'hydrolysat obtenu ainsi que sur sa teneur en acides aminés libres. Il est donc d'une grande importance pour les besoins de l'invention.

On choisira un rapport Protéases/Protéines suffisamment faible pour obtenir l'hydrolysat souhaité, mais aussi suffisamment élevé afin d'observer des cinétiques compatibles avec des applications industrielles.

On adoptera un rapport Chymotrypsine/Protéines totales compris entre 20 000 Unités ATEE et 300 000 Unités ATEE pour 100 grammes de protéines totales.

Le rapport Trypsine/Protéines totales sera déduit en fonction du rapport Chymotrypsine/Trypsine déjà choisi. Par exemple, si on décide d'adopter un rapport Chymotrypsine/Trypsine de 2, 0 et un rapport Chymotrypsine/Protéines totales de 100 000 unités ATEE pour 100 grammes. Le rapport Trypsine/Protéines totales sera donc de 50 000 unités BAEE pour 100 grammes.

### Mode d'utilisation des enzymes.

Les deux protéases peuvent être utilisées en solution dans la préparation à hydrolyser (lactosérum ou solution de protéines purifiées) ou bien immobilisées sur des supports insolubles.

Dans ce dernier cas, on pourra mettre en oeuvre toutes les méthodes connues d'immobilisation d'enzymes (par adsorption, par liaisons covalentes) et n'importe quel support solide pourvu que celui-ci soit compatible avec l'application envisagée.

Il faudra, cependant, que la méthode et le support adoptés permettent de conserver, après immobilisation, le rapport Chymotrypsine/Trypsine qui a été choisi. Il est ainsi préférable de sélectionner des méthodes qui permettent d'associer les enzymes au support par liaisons covalentes. Les composites obtenus présenteront une meilleure stabilité.

A titre indicatif, on pourra utiliser, des supports tels que les billes poreuses de silice ou d'alumine ou bien des rafles de maïs broyées et calibrées. Dans un premier temps, on greffera, sur de tels supports, des fonctions amines primaires, par exemple :

a) à l'aide de silanes pour les supports siliceux ou à base d'alumine ;

b) après un traitement d'oxydation (au métapériodate de sodium par exemple), en utilisant des préparations d'éthylènediamine, pour la rafle de maïs.

Dans un deuxième temps, on activera les fonctions greffées par exemple à l'aide de glutaraldéhyde.

Ensuite l'addition des mélanges protéasiques aux supports (rafles de maïs, silices, alumines), suivie d'une réticulation éventuelle, permettra d'obtenir des composites stables dont le rapport Chymotrypsine/Trypsine sera proche de celui qui a été choisi.

### Mise en oeuvre de l'hydrolyse et contrôles analytiques.

Le pH de la matière première choisie (lactosérum ou solution de protéines purifiées) sera ajusté à une valeur compatible avec le bon fonctionnement simultané des deux protéases. Celles-ci ont des pH optima d'activité légèrement différents : de 8 à 8,5 pour la chymotrypsine et de 8,5 à 9,0 pour la trypsine.

On choisira donc d'ajuster le pH dans une gamme comprise entre 7,5 et 9,0, et de préférence entre 8,0 et 8,5.

Le pH sera ajusté à l'aide d'une base compatible avec les applications envisagées. On pourra généralement adopter la soude (hydroxyde de sodium), la potasse (hydroxyde de potassium), l'ammoniaque ou un mélange de ces bases afin d'équilibrer l'apport de cations.

La réaction d'hydrolyse sera mise en oeuvre dans un système où le pH et la température seront régulés.

Le pH sera maintenu à sa valeur de départ par addition de base.

La température de consigne sera telle qu'elle permettra d'obtenir des activités enzymatiques élevées (et donc de réduire le temps d'hydrolyse ou la quantité d'enzymes à utiliser), avec une stabilité convenable.

Une température relativement élevée permettra également de limiter ou d'éviter des développements microbiens.

La température sera comprise entre 40 et 60°C et, préférentiellement, entre 45 et 50°C.

On peut mettre en contact la matière première à traiter avec le catalyseur :

a) en solution agitée dans le réacteur dans le cas de préparations protéolytiques solubles ;

b) en lit agité modérément ou en recirculation sur un lit fixe dans le cas de préparations de protéases immobilisées.

Le mode de fonctionnement de l'hydrolyse est discontinu, le principe étant d'arrêter l'hydrolyse au moment où la répartition des masses molaires des différents types de peptides est conforme au produit désiré.

La cinétique de la réaction sera essentiellement fonction de la température adoptée et du rapport Enzymes/Substrat choisi puis, dans une moindre mesure, du pH et du rapport Chymotrypsine/Trypsine (compris entre 1,5 et 3,0).

Dans un premier temps, afin de connaître le temps exact d'hydrolyse pour des conditions opératoires bien définies et pour contrôler l'hydrolysat en fin de traitement, on pratique une analyse du profil peptidique par chromatographie en filtration sur gel.

Cette analyse peut être effectuée, selon le même principe (séparation des espèces selon leurs tailles : familles de masses molaires), à l'aide de différents gels de chromatographie appropriés. On peut citer, à titre d'exemples, les gels Sephadex G15 qui distinguent et séparent les espèces peptidiques dont la masse molaire est inférieure à 1500 et les gels Sephadex G25 qui distinguent et séparent les espèces peptidiques dont la masse molaire est comprise entre 1 000 et 5 000.

On voit que, pour caractériser le produit de l'invention, qui comprend une majorité de peptides dont la masse molaire s'étend de 500 à 5000, il est nécessaire de mettre en oeuvre deux chromatographies complémentaires : l'une à l'aide de Sephadex G15 et l'autre à l'aide de Sephadex G25.

La mise en oeuvre des gels Sephadex G15 et G25 demande un temps de réalisation relativement long. On peut obtenir plus rapidement des résultats (quoiqu'avec une moindre précision) par F.P.L.C. (Fast Protein Liquid Chromatography) en utilisant, par exemple, une colonne de chromatographie Superose 12.

Toutes ces chromatographies (G15, G25, FPLC) doivent être réalisées en milieu acide (tampon citrate ou présence d'acide acétique ou d'acide formique) afin d'éviter le phénomène de condensation des peptides en milieu neutre qui est à l'origine d'une surestimation de la taille des peptides. Un pH maximum de 3,0 est requis.

L'analyse des fractions éluées est réalisée par mesure de la densité optique à 280 nm, 237 nm ou 215 nm selon les éluants adoptés ou bien par mesure à la ninhydrine des groupes amines libres.

Ainsi, pour des conditions opératoires bien déterminées et bien contrôlées, une série d'analyses consécutives des profils peptidiques permet de connaître le temps d'hydrolyse nécessaire pour atteindre le degré d'hydrolyse désiré. A ce degré d'hydrolyse correspond une quantité propre de base consommée et par la suite, il sera utile et plus pratique de conduire l'hydrolyse jusqu'à concurrence de cette quantité donnée de base.

La chromatographie n'interviendra alors qu'en fin d'hydrolyse pour contrôler le profil peptidique de l'hydrolysat.

Lorsque le degré d'hydrolyse souhaité est atteint, il est nécessaire d'arrêter la réaction. Pour cela, on pourra acidifier le milieu (pH $\leq$ 4,0) et amener la température à une valeur inférieure à 20°C.

Elimination des protéines résiduelles et des enzymes.

Lorsque l'hydrolyse est terminée, la préparation traitée contient, d'une part, les peptides et acides aminés que l'on veut récupérer et, d'autre part, les protéines résiduelles et les enzymes protéolytiques.

Les protéines résiduelles sont présentées essentiellement par les structures les plus difficilement hydrolysables par le système enzymatique adopté ; il s'agit principalement de la sérum albumine et d'immunoglobulines.

Deux stratégies peuvent être adoptées selon que l'hydrolyse a été réalisée à l'aide d'enzymes solubles ou à l'aide d'enzymes immobilisées :

a) Enzymes solubles : les capacités d'insolubilisation des protéines résiduelles et des deux protéases sont différentes et il n'est pas aisé de pratiquer une co-précipitation de ces deux types de protéines. Par contre, on pourra facilement éliminer toutes les structures protéiques par ultra-filtration. Pour cela, tous les types de membranes et tous les systèmes d'ultra-filtration commercialisés conviennent mais il faut que le seuil de coupure des membranes soit inférieur ou égal à 10 000. La conduite de l'ultra-filtration s'effectue normalement selon les procédures connues de ce type d'opération.

On pourrait aussi pratiquer une ultra-filtration/dia-filtration afin de récupérer le maximum de matière azotée.

C'est le perméat d'ultra-filtration récupéré (c'est-à-dire, le produit qui est passé à travers la membrane) qui constitue l'hydrolysat de l'invention.

b) Enzymes immobilisées : le composite d'enzymes immobilisées est tout d'abord séparé de la préparation hydrolysée.

Dans le cas d'un procédé à lit fixe, la séparation est aisée ; dans le cas d'une procédure en lit agité, le mode de séparation sera fonction du type de support. On procède généralement par simple décantation, filtration ou par centrifugation.

La phase liquide récupérée contient cette fois de la matière azotée uniquement d'origine laitière (protéines résiduelles, peptides et acides aminés). On peut procéder alors de deux façons, pour extraire les protéines :

- Ultra-filtration ou ultrafiltration/dia-filtration comme décrit ci-dessus.

- Thermisation : les peptides et les acides aminés ont une plus grande solubilité que les protéines et on peut, en conséquence, précipiter sélectivement les protéines dans le milieu. Celles-ci sont ensuite séparées des peptides par centrifugation ou par micro-filtration.

La précipitation des protéines est réalisée par effets combinés de la chaleur et du pH. L'hydrolysat est porté à une température d'au moins 60°C et au plus 70°C. Le pH est ajusté à 4,0. Pour cela on peut utiliser n'importe quel acide compatible avec l'application envisagée (chlorhydrique, lactique, citrique, acétique, phosphorique). Par exemple, la préparation est laissée 1 heure à 60°C ou 30 mn à 70°C, puis on sépare les protéines précipitées.

Le surnageant obtenu présente l'hydrolysat de l'invention.

L'hydrolysat de l'invention obtenu soit par ultra-filtration, soit par thermisation pourra ensuite être séché ou concentré afin de présenter une bonne stabilité microbiologique.

Les exemples non limitatifs suivants sont donnés afin d'illustrer l'invention.

Les exemples 1 à 4 illustrent les cinétiques observées en fonction de différents rapports Enzymes/Substrat.

EXEMPLE 1

A partir d'une poudre de protéines de lactosérum purifiées par ultra-filtration à 75% de protéines, on prépare une solution aqueuse à 10% d'extrait sec (soit 7,5% de protéines).

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 1 350 Unités BAEE de trypsine et 2 750 Unités ATEE de chymotrypsine par gramme de protéines mises en oeuvre.

Après ajout du mélange protéasique, le pH est maintenu à 8,0 par addition de soude.

Après 1 heure d'hydrolyse, le pH est ajusté à 6,0 à l'aide d'acide chlorhydrique, la température est ramenée à 20°C et on pratique une ultra-filtration sur membrane de coupure 5 000 (MM).

Le perméat d'ultra-filtration constitue l'hydrolysat que l'on veut obtenir.

EXEMPLE 2

A partir d'une poudre de protéines de lactosérum purifiées par ultrafiltration à 75% de protéines, on prépare une solution aqueuse à 10% d'extrait sec.

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 700 Unités BAEE de trypsine et 1 400 Unités ATEE de chymotrypsine par gramme de protéines mises en oeuvre.

Après ajout du mélange protéasique, le pH est maintenu à 8,0 par addition de soude.

Après 2,5 heures d'hydrolyse, le pH est ajusté à 6,0 à l'aide d'acide chlorhydrique, la température est ramenée à 20°C et on pratique une ultra-filtration sur membrane de coupure 5 000 (MM).

Le perméat d'ultra-filtration constitue l'hydrolysat que l'on veut obtenir.

EXEMPLE 3

A partir d'une poudre de protéines de lactosérum purifiées par ultra-filtration à 75% de protéines, on prépare une solution aqueuse à 10% d'extrait sec.

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 300 Unités BAEE de trypsine et 600 Unités ATEE de chymotrypsine par gramme de protéines mises en oeuvre.

Après ajout du mélange protéasique, le pH est maintenu à 8,0 par addition de soude.

Après 8 heures d'hydrolyse, la température est ramenée à 20°C et on pratique une ultra-filtration sur membrane de coupure 5 000 (MM).

Le perméat d'ultra-filtration constitue l'hydrolysat que l'on veut obtenir.

EXEMPLE 4

A partir d'une poudre de protéines de lactosérum purifiées par ultra-filtration à 75% de protéines, on prépare une solution aqueuse à 10% d'extrait sec.

Le pH de la solution est ajusté à 8,0 à l'aide de soude.

La solution est portée à 50°C dans un réacteur disposant d'une régulation de pH.

On prépare un mélange de trypsine et de chymotrypsine de façon à offrir 150 Unités BAEE de trypsine et 300 Unités ATEE de chymotrypsine par gramme de protéines mises en oeuvre.

Après ajout du mélange protéasique, le pH est maintenu à 8,0 à l'aide de soude.

Après 15 heures d'hydrolyse, on pratique une ultra-filtration sur membrane de coupure 5 000 (MM).

Le perméat d'ultra-filtration constitue l'hydrolysat que l'on veut obtenir.

Les exemples 5 à 7 illustrent l'application du procédé à différents types de lactosérum.

EXEMPLE 5

La matière première d'hydrolyse est un lactosérum de pâte pressée, concentré par osmose inverse à 22,6% d'extrait sec. Son pH initial est 6,3 et sa matière azotée totale représente 14,6 % de l'extrait sec.

Le pH du lactosérum est ajusté à 8,0 à l'aide de soude, puis celui-ci est placé à 50°C dans un réacteur muni d'un système de régulation de pH.

On prépare un mélange de trypsine et de chymotrypsine de façon à offrir 1 350 Unités BAEE de trypsine et 2 750 Unités ATEE de chymotrypsine par gramme de protéines mises en oeuvre, soit 4 500 Unités BAEE de trypsine et 9 100 Unités ATEE de chymotrypsine pour 100 grammes de lactosérum concentré mis en oeuvre.

Après ajout du mélange protéasique, le pH est maintenu à 8,0 par addition de soude.

Après 1 heure d'hydrolyse, le pH est ajusté à 6,0 à l'aide d'acide chlorhydrique, la température est ramenée à 20°C, puis on met en oeuvre une ultra-filtration du lactosérum hydrolysé.

Le profil peptidique du perméat obtenu correspond au type d'hydrolysat recherché.

## EXEMPLE 6

La matière première d'hydrolyse est un lactosérum de pâte pressée, déminéralisé par électrodialyse et concentré par osmose inverse.

Ses principales caractéristiques sont les suivantes:
- Extrait sec : 21,3 %
- Matière azotée totale : 15,4 % de l'extrait sec
- Cendres : 0,9 % de l'extrait sec
- pH initial : 5,0.

Le pH est ajusté à 8,0 à l'aide de soude, puis le lactosérum concentré est placé à 50°C dans un réacteur muni d'une régulation de pH.

On prépare un mélange de trypsine et de chymotrypsine de façon à offrir 1 350 Unités BAEE de trypsine et 2 750 Unités ATEE de chymotrypsine par gramme de protéines mises en oeuvre, soit 4 500 Unités BAEE de trypsine et 9 100 Unités ATEE de chymotrypsine pour 100 grammes de lactosérum concentré mis en oeuvre.

Après ajout du mélange protéasique, le pH est maintenu à 8,0 par addition de soude.

Après 1 heure d'hydrolyse, le pH est ajusté à 5,0 à l'aide d'acide chlorhydrique, la température est ramenée à 20°C, puis on met en oeuvre une ultra-filtration du lactosérum.

Le perméat d'ultra-filtration constitue l'hydrolysat que l'on veut obtenir.

## EXEMPLE 7

La matière première d'hydrolyse est un lactosérum de pâte pressée à 6% d'extrait sec. Son pH initial est 6,5 et la matière azotée totale représente 14% de l'extrait sec.

Le pH est ajusté à 8,0 à l'aide de soude, puis le lactosérum est placé à 50°C dans un réacteur muni d'une régulation de pH.

On prépare un mélange de trypsine et de chymotrypsine de façon à offrir 700 Unités BAEE de trypsine et 1 400 Unités ATEE de chymotrypsine par gramme de protéines mises en oeuvre, soit 600 unités BAEE de trypsine et 1 200 Unités ATEE de chymotrypsine pour 100 grammes de lactosérum mis en oeuvre.

Après ajout du mélange protéasique, le pH est maintenu à 8,0 à l'aide de soude.

Après 2,5 heures d'hydrolyse, le pH est ajusté à 6,5 à l'aide d'acide chlorhydrique, la température est ramenée à 20°C, puis on met en oeuvre une ultra-filtration

Le perméat d'ultra-filtration constitue l'hydrolysat que l'on veut obtenir.

## EXEMPLE 8

Cet exemple illustre la mise en oeuvre du procédé à l'aide d'enzymes immobilisées.

On prépare un composite de protéases immobilisées par liens covalents à un support minéral de la façon suivante :

*Support : ce sont des billes de silice poreuse dont le diamètre moyen est 450 microns. Le diamètre moyen des pores est 350 Angströms et la surface spécifique moyenne est 35 m$^2$ par gramme.

*On greffe des fonctions amines primaires à ce support selon le protocole suivant :
- Mise en contact de 1 gramme de support sec avec 100 ml d'une solution à 0,5 % de gamma-amino-propyl-triéthoxysilane dont le pH a été ajusté à 4,5 par addition d'acide acétique.
- Agitation 1 heure à 70°C.
- Rinçages abondants à l'eau.

*Le support (1 gramme) est ensuite activé 2 heures à 20°C à l'aide d'une solution aqueuse de glutaraldéhyde à 2,5 % (100 ml), puis rincé abondamment.

* Dans 100 ml de tampon phosphate 50mM, pH 7,0, on prépare un mélange à 3 500 Unités BAEE de trypsine et 7000 Unités ATEE de chymotrypsine que l'on met en contact avec 1 gramme de support activé, à 4°C pendant 16 heures.

*Après rinçage du support, on effectue à 20°C, pendant 2 heures, une réticulation des protéases à l'aide de 100 ml d'une solution aqueuse de glutaraldéhyde à 2,5% pour 1 gramme de support.

*Les protéases seulement adsorbées sont ensuite éliminées par trois lavages de 15 mn à l'aide d'une solution molaire de chlorure de sodium (100 ml pour 1 gramme de support, soit au total 300 ml).

Cette opération s'effectue à 20°C et est suivie d'un rinçage abondant.

La réaction d'hydrolyse est mise en oeuvre de la façon suivante :

* Matière première : lactosérum de pâte pressée, concentré à 22,6% d'extrait sec par osmose inverse. Son pH initial est 6,3 et sa matière azotée totale représente 14,6% de l'extrait sec.

* Hydrolyse : Le pH du lactosérum est ajusté à 8,0 à l'aide de soude, puis on met en contact 150 g de composite de protéases immobilisées avec 500 g de lactosérum, à 40°C, sous agitation lente afin de maintenir le composite en suspension dans le lactosérum.

Le pH est régulé à 8,0 par addition de soude.

Après 20 heures d'hydrolyse, le composite est séparé du lactosérum par décantation.

Le pH du lactosérum est ajusté à 4,0 à l'aide d'acide chlorhydrique et la préparation est portée 1 heure à 60°C, puis centrifugée. Le surnageant récupéré représente l'hydrolysat que l'on veut obtenir.

Il va de soi que les modes de réalisation décrit ne sont que des exemples et qu'on pourrait les modifier, notamment par substitution d'équivalents techniques, sans sortir pour cela du cadre de l'invention.

## Revendications

1. Hydrolysat partiel de protéines de lactosérum ne contenant pas de protéines entières résiduelles, caractérisé en ce qu'il contient des peptides répartis selon la distribution suivante, en fonction de leur masse molaire :

| Masse molaire (g par mole) | Proportion pondérale (en g de peptides pour 100 g de peptides totaux) |
|---|---|
| MM > 5000 | 0 - 5 |
| 5000 > MM > 3500 | 15 - 25 |
| 3500 > MM > 1500 | 20 - 30 |
| 1500 > MM > 500 | 35 - 45 |
| MM < 500 | 5 - 10 |

ainsi que des acides aminés libres,, la teneur de l'hydrolysat en acides aminés libres étant inférieure à 10% (calculée en gramme d'azote pour 100 grammes d'azote total).

2. Aliment lacté diététique hypoallergénique, caractérisé en ce qu'il contient un hydrolysat tel que défini à la revendication 1.

3. Procédé enzymatique de préparation de l'hydrolysat défini à la revendication 1, qui comprend les étapes suivantes :

a) hydrolyse enzymatique à l'aide d'un mélange des enzymes chymotrypsine et de trypsine ayant un rapport d'activité chymotrypsine/trypsine compris entre 1,5 et 3,0, d'un substrat choisi parmi les lactosérums, les lactosérums délipidés et/ou déminéralisés, les lactosérums concentrés, les lactosérums concentrés délipidés et/ou déminéralisés, et les solutions aqueuses de protéines extraites desdits lactosérums, à un pH de 7,5 à 9,0 et à une température de 40 à 60°C pendant un temps permettant d'obtenir la distribution de peptides définie dans la revendication 1, le rapport chymotrypsine/protéines totales contenues dans le substrat étant compris entre 20000 et 300000 unités ATEE pour 100 g de protéines totales ; et

b) séparation des enzymes et des protéines résiduelles non hydrolysées.

4. Procédé selon la revendication 3, dans lequel on utilise un mélange d'enzymes solubles, caractérisé en ce que l'étape b) est réalisée par ultra-filtration et/ou dia-filtration avec emploi d'au moins une membrane ayant un seuil de coupure inférieur à 10 000.

5. Procédé selon la revendication 3, dans lequel on utilise un mélange d'enzymes immobilisées, caractérisé en ce que l'étape b) consiste d'abord à séparer les enzymes immobilisées par décantation, centrifugation et/ou filtration, puis à séparer les protéines résiduelles non hydrolysées par ultra-filtration et/ou dia-filtration avec emploi d'au moins une membrane ayant un seuil de coupure inférieur à 10 000, afin d'obtenir l'hydrolysat.

6. Procédé selon la revendication 3, dans lequel on utilise un mélange d'enzymes immobilisées, caractérisé en ce que l'étape b) consiste d'abord à séparer les enzymes immobilisées par décantation, centrifugation et/filtration, puis à provoquer une précipitation des protéines résiduelles non hydrolysées par chauffage du produit obtenu à une température de 60 à 70°C en milieu acide, et enfin à séparer le précipité résultant par centrifugation ou micro-filtration du reste du produit qui constitue l'hydrolysat.

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.5) |
|---|---|---|---|
| D,X | EP-A-0 022 019  (INSTITUT NATIONAL DE LA RECHERCHE AGRONOMIQUE)<br>* abrégé; revendications 1-17 *<br>--- | 1-4 | A 23 J   3/00<br>A 23 J   1/20<br>A 23 L   1/305<br>A 23 C   9/20 |
| A | DE-A-3 440 734  (HOECHST AG)<br>* revendications 1-4 *<br>--- | 1 | |
| A | EP-A-0 126 290  (SOCIETE DES PRODUITS NESTLE S.A.)<br>* revendications 1-7 *<br>--- | 1,4 | |
| A | EP-A-0 226 221  (E.-G. SAMUELSSON)<br>* revendications 1-10 *<br>--- | 1,4 | |
| A | FR-A-2 487 642  (FROMAGERIES BEL, S.A.)<br>* exemple 2; revendications 1-10 *<br>----- | 1 | |

### DOMAINES TECHNIQUES RECHERCHES (Int. Cl.5)

A 23 J   3/00
A 23 J   1/00
A 23 L   1/00
A 23 C   9/00

Le présent rapport a été établi pour toutes les revendications

| Lieu de la recherche | Date d'achèvement de la recherche | Examinateur |
|---|---|---|
| BERLIN | 11-10-1989 | SCHULTZE D |